# EUROPÄISCHE PATENTSCHRIFT

(11) **EP 0 591 307 B1**
(45) Veröffentlichungstag und Bekanntmachung des Hinweises auf die Patenterteilung: **18.09.1996**
(21) Anmeldenummer: 92912891.6
(22) Anmeldetag: 12.06.1992
(51) Int. Cl.: C08G 59/10, C09J 163/00

(54) **REAKTIVER SCHMELZKLEBSTOFF**
REACTIVE HOT-MELT ADHESIVE
COLLE A FUSION REACTIVE

(30) Priorität: 26.06.1991 US 721045
(43) Veröffentlichungstag der Anmeldung: 13.04.1994
(73) Patentinhaber: Henkel Teroson GmbH, 69123 Heidelberg (DE)
(72) Erfinder: BLANK, Norman, E., Wayne, NJ, 07470 (US); SCHENKEL, Hubert, D-6902 Sandhausen (DE)
(74) Vertreter: UEXKÜLL & STOLBERG
(86) Internationale Anmeldenummer: EP9201365
(87) Internationale Veröffentlichungsnummer: WO9300381

(56) Entgegenhaltungen:
- EP-A- 0 354 498
- CH-A- 428 213
- DATABASE WPIL Derwent Publications Ltd., London, GB; AN 86-098069
- DATABASE WPIL Derwent Publications Ltd., London, GB; AN 82-00919J

## Beschreibung

Die Erfindung betrifft einen reaktiven Schmelzklebstoff, der eine oder mehrere Expoxidharzkomponenten, mindestens einen thermisch aktivierbaren latenten Härter für die Harzkomponenten, sowie ggf. Beschleuniger, Füllstoffe, Thixotropie-Hilfsmittel und weitere übliche Zusatzstoffe enthält. Die Erfindung betrifft ferner ein Verfahren zur Herstellung des reaktiven Schmelzklebstoffes sowie dessen Verwendung.

Schmelzklebstoffe der eingangs genannten Art sind an sich bekannt. Beispielsweise werden in der Automobilindustrie reaktive Schmelzklebstoffe auf Expoxidharzbasis verwendet. Diese bekannten Expoxidklebstoffe sind im ausgehärteten Zustand jedoch nur wenig flexibel. Die mit ihnen erhaltenen Verklebungen weisen zwar eine hohe Zugscherfestigkeit auf, platzen aber bei seitlichem Angriff durch Abschälen leicht ab. Es ist ein bekanntes Problem, daß Klebstoffe, mit denen sich hohe Zugscherfestigkeiten erzielen lassen, häufig nur eine geringe Winkelschälfestigkeit ergeben.

In der Automobilindustrie wird beim Verkleben von Blechen häufig so vorgegangen, daß der Klebstoff zunächst warm aufgebracht, aber noch nicht ausgehärtet wird. Beim Abkühlen erstarrt der Klebstoff und schafft unter Ausbildung einer ausreichenden Handhabungsfestigkeit eine vorläufige Verbindung. Die so miteinander verbundenen Bleche werden in Wasch-, Phosphatier- und Tauchlack-Bädern behandelt. Erst anschließend wird der Klebstoff in einem Ofen gehärtet. Es besteht daher ein Bedürfnis für Schmelzklebstoffe, die bereits vor der Aushärtung eine ausreichende Auswaschbeständigkeit aufweisen.

Aus der DE-A-32 02 300 ist es bekannt, Expoxidharzen zur Erhöhung der Flexibilität Polyole zuzusetzen. In der DE-A-34 09 188 sind mit Alkoholen modifizierte Epoxidharze beschrieben. Aus der EP-A-01 30 741 sind Polyoxypropylenamine bzw. aminoterminierte Polypropylenglykole (ATPPG) und ihre Verwendung als Härter für Epoxidharze bekannt.

In der DE-C-26 59 928 und der DE-C-26 59 989 sind wässrige Dispersionen beschrieben, die Epoxidharze und Dicyandiamid als Härter enthalten. Die wässrigen Dispersionen werden als Überzugsmittel verwendet. Auf hohe Zugscher- und Winkelschälfestigkeiten kommt es bei Überzugsmitteln jedoch nicht an.

Aus der DE-A-38 27 626 ist es bekannt, die Flexibilität von reaktiven Schmelzklebstoffen auf Epoxidharzbasis dadurch zu verbessern, daß man bei der Herstellung der Harzkomponente ein lineares Polyoxypropylen mit Aminoendgruppen zusetzt. Man erreicht auf diese Weise eine deutliche Verbesserung der Eigenschaften, insbesondere der Flexibilität und der Schälfestigkeit. Insbesondere die Eigenschaften bei tiefen Temperaturen bis zu -40°C vermögen jedoch noch nicht zu befriedigen. Beispielsweise werden Kraftfahrzeuge im Winterhalbjahr nicht selten Temperaturen weit unter 0°C ausgesetzt.

Aufgabe der vorliegenden Erfindung ist es, reaktive Schmelzklebstoffe der eingangs genannten Art dahingehend zu verbessern, daß sie ausreichende Flexibilität und eine erhöhte Schälfestigkeit nicht nur bei Raumtemperatur, sondern auch bei tiefen Temperaturen unter 0°C aufweisen. Die Verbesserung soll ohne Beeinträchtigung der Zugscherfestigkeit erzielt werden. Die reaktiven Schmelzklebstoffe sollen darüber hinaus vor dem Aushärten eine ausreichende Auswaschbeständigkeit haben.

Die Aufgabe wird erfindungsgemäß durch einen reaktiven Schmelzklebstoff gemäß Anspruch 1 gelöst. Die Epoxidharzkomponente wird durch Umsetzung von
a) einem bei Raumtemperatur festen Epoxidharz und
b) einem bei Raumtemperatur flüssigen Epoxidharz mit
c) linearen amino-terminierten Polyethylenglykolen (ATPEG) oder linearen und/oder trifunktionellen aminoterminierten Polypropylenglykolen (ATPPG) erhalten, wobei die Epoxidharze a) und b) in einer solchen Menge eingesetzt werden, daß ein Überschuß an Epoxidgruppen gegenüber den Aminogruppen gewährleistet ist.

An dieser Stelle sei darauf hingewiesen, daß die Komponenten a), b) und c) jeweils auch Gemische von Verbindungen der angegebenen Art sein können.

Dieses Reaktionsprodukt wird durch Zusatz weiterer modifizierter Epoxidharze wie
i) Addukten dimerer Fettsäuren unterschiedlichen Molekulargewichtes mit Epoxidharzen vom Typ Diglycidylether von Bisphenol A oder F (DGEBA oder DGEBF) (z.B. Epikote® oder EPON® 872),
ii) Addukten von carboxylterminiertem Butadien-Nitrilkautschuk (CTBN) (Hycar® 1300X8, 1300X13; Struktol®) mit DGEBA oder DGEBF
dahingehend modifiziert, daß es auch bei hohen Temperaturen (bis +90°C) und unter Alterungsbedingungen (Korrosion, Feuchtigkeit) eine dauerhafte Beständigkeit aufweist. Vorzugsweise werden 4 bis 40, insbesondere 5 bis 25, z.B. 20% der Epoxidäquivalente (EEW) des gesamten Epoxidharzanteils durch solche Addukte ersetzt.

Der erfindungsgemäße Klebstoff führt bei hoher Zugscherfestigkeit gleichzeitig zu hoher Winkelschäl- und Schlagfestigkeit im Temperaturbereich von -40°C bis +90°C. Er weist im ausgehärteten Zustand das insbesondere für die Automobilherstellung erforderliche Maß an Flexibilität auf. Die Flexibilität der Harzmatrix läßt sich einstellen, indem man ATPEG bzw. ATPPG unterschiedlicher Funktionalität (bi- oder trifunktionell) und variabler Kettenlänge verwendet, und indem man das Verhältnis von ATPEG/ATPPG zu Epoxidharz variiert.

Mit steigender Kettenlänge der ATPEG oder ATPPG wird die Flexibilität der Harzmatrix größer. Der Zusatz weiterer flexibilisierter Epoxidharze bewirkt eine auch bei hoher Temperatur ausreichende Betriebsfestigkeit eines geklebten Bauteils. Durch die hydrophobe Struktur der weiteren Harzkomponenten (Epoxid-Dimersäure-Addukte bzw. Epoxid-Butadien-Nitrilkautschuk-Addukte) wird auch das Alterungsverhalten der compoundierten Klebstoffe günstig beeinflußt.

Die Härte des reaktiven Schmelzklebstoffes im erkalteten Zustand, d.h. insbesondere nach dem Auftragen aber vor der Aushärtung, hängt vom Verhältnis von festem Epoxidharz a) zu flüssigem Epoxidharz b) ab. Je größer der Anteil an festem Epoxidharz a) ist, um so härter ist der erkaltete, semikristalline Schmelzklebstoff.

Bei der Umsetzung der Epoxidharze mit dem ATPEG/ATPPG wird ein Überschuß an Epoxidgruppen gegenüber den Aminogruppen angewendet, damit letztere vollständig mit Epoxidgruppen abreagieren. Typischerweise ist ein 1,5- bis 10-facher Überschuß, beispielsweise ein 3,5-facher Überschuß an EEW gegenüber den aktiven Wasserstoff-Äquivalenten (AHEW) der Amine vorhanden.

Es werden Epoxidharze verwendet, die aus Bisphenol A oder Bisphenol F und Epichlorhydrin erhältlich sind. Das Epoxidharz a) muß ein ausreichend hohes Molekulargewicht aufweisen, damit es bei Raumtemperatur fest ist. Erfindungsgemäß hat dieses Harz ein Epoxid-Äquivalentgewicht von > 400, besonders bevorzugt von 450 bis 550.

Das Epoxidharz b) muß ein hinreichend niedriges Molekulargewicht aufweisen, damit es bei Raumtemperatur flüssig ist. Erfindungsgemäß hat dieses Harz ein Epoxid-Äquivalentgewicht von 150 bis 220, besonders bevorzugt von 182 bis 192.

Als amino-terminierte Polyethylenglykole (ATPEG) und Polypropylenglykole (ATPPG) werden folgende Verbindungen eingesetzt:
1. lineare amino-terminierte Polyethylenglykole (ATPEG) der Formel

H₂N-(CH₂)₂-[O-(CH₂)₂-O-(CH₂)₂]ₙ-NH₂

in der n = 17 bis 27 ist.
2. lineare amino-terminierte Polypropylenglykole (ATPPG) der Formel 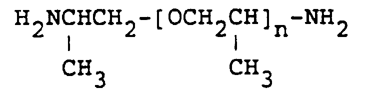 in der n = 5 bis 100 ist. Sie sind unter der Handelsbezeichnung Jeffamine® der D-Serie erhältlich.

| Jeffamine® Typ | x | ungefähres Molekulargewicht |
|---|---|---|
| D-400 | 5-6 | 400 |
| D-2000 | 33 | 2000 |
| D-4000 | 68 | 4000 |

3. Trifunktionelle Verbindungen der Formel 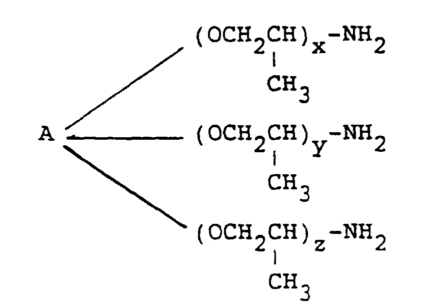 in der A eine CH₃CH₂C(CH₂)₃≡ oder eine 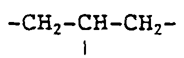 Gruppe ist und x, y und z unabhängig voneinander 1 bis 40 und x + y + z vorzugsweise > 6 sind.

Sie sind unter der Handelsbezeichnung Jeffamine® der T-Serie erhältlich.

| Jeffamine® Typ | A (Initiator) | ungefähres Molekulargewicht |
|---|---|---|
| T-403 | Trimethylolpropan | 440 |
| T-3000 | Glycerin | 3000 |
| T-5000 | Glycerin | 5000 |

Wie bereits erwähnt, lassen sich die Eigenschaften des reaktiven Schmelzklebstoffes durch die Variation des Mengenverhältnissesder Harzkomponenten verändern. Erfindungsgemäß werden 0,5 bis 1 Äquivalente (30 bis 50 Gew.%) des bei Raumtemperatur festen Epoxidharzes a) und 0,5 bis 1 Äquivalente (10 bis 25 Gew.%) des bei Raumtemperatur flüssigen Epoxidharzes b) mit 0,125 bis 0,5 Äquivalenten (35 bis 50 Gew.%) der amino-terminierten Polyethylen- bzw. -propylenglykole umgesetzt, wobei 0,5 bis 10 Gew.% ein trifunktionelles ATPPG sein können. Diese kälteflexible Harzkomponente wird durch Zusatz von Dimersäure- und/oder Butadien-Nitrilkautschuk/DGEBA- bzw. -/DGEBF-Addukten in ihrer Wärmebeständigkeit verstärkt.

Als thermisch aktivierbare latente Härter sind alle Verbindungen und Mischungen von Verbindungen geeignet, die für diesen Zweck in Epoxidharzen bekanntermaßen einsetzbar sind. Bei der Auswahl ist allerdings zu beachten, daß die Aktivierung erst bei einer Temperatur erfolgen soll, die deutlich oberhalb des Erweichungspunktes des reaktiven Schmelzklebstoffes, d.h. mindestens etwa 50°C oberhalb des Erweichungspunktes liegt. Dies ist einerseits im Hinblick auf die Herstellung des reaktiven Schmelzklebstoffes und andererseits im Hinblick auf dessen Anwendung erforderlich. Ein erfindungsgemäß bevorzugter latenter Härter ist Dicyandiamid.

Bei dem erfindungsgemäßen Verfahren zur Herstellung des reaktiven Schmelzklebstoffes wird zunächst in einer ersten Stufe die Harzkomponente hergestellt. Zu diesem Zweck werden das feste Epoxidharz a) und das flüssige Epoxidharz b) mit den ATPEG oder ATPPG c) in dem gewünschten Mengenverhältnis umgesetzt. Die Reaktion erfolgt bei erhöhter Temperatur, vorzugsweise bei 90 bis 130°C, beispielsweise bei etwa 120°C, während einer Dauer von z.B. drei Stunden.

Das so erhaltene Harz ist bei Raumtemperatur fest bzw. dickflüssig. Es kann unmittelbar zum reaktiven Schmelzklebstoff weiterverarbeitet werden. Es ist aber auch möglich, das Harz auf Vorrat herzustellen und bis zur Weiterverarbeitung zu lagern.

Zur Weiterverarbeitung ist es zunächst erforderlich, das Harz zu erwärmen, um seine Viskosität so weit zu erniedrigen, daß es mit den weiteren Bestandteilen des reaktiven Schmelzklebstoffes vermischt werden kann. Vcrzugsweise wird das Harz auf eine Temperatur oberhalb von 50°C, beispielsweise 60 bis 110°C, insbesondere 70 bis 95°C, erwärmt. Dann werden die weiteren modifizierten Harze zugegeben und homogen vermischt. Dabei ist darauf zu achten, daß nicht bis auf eine Temperatur erwärmt wird, bei der der zugesetzte latente Härter aktiviert werden würde. Zur Erwärmung des Harzes und zur Vermischung mit den übrigen Bestandteilen des reaktiven Schmelzklebstoffes wird zweckmäßigerweise ein heizbarer Kneter oder Planetenmischer verwendet. Es ist bevorzugt, daß der latente Härter zuletzt nach den übrigen Bestandteilen in die Mischung eingearbeitet wird. Dabei ist weiterhin bevorzugt, daß das Gemisch vor dem Zusatz des latenten Härters auf eine Temperatur an der unteren Grenze des für die Verarbeitung geeigneten Temperaturbereiches abgekühlt wird.

Der erfindungsgemäße reaktive Schmelzklebstoff ist zum Verkleben von Teilen aus unterschiedlichen Materialien geeignet. Vorzugsweise wird er zum Verkleben von Metallteilen und insbesondere zum Verkleben von Stahlblechen eingesetzt. Hierbei kann es sich auch um elektroverzinkte, feuerverzinkte oder mit Zink/Nickel beschichtete Stahlbleche handeln.

Üblicherweise wird der Klebstoff in Form einer Schmelze einseitig, d.h. auf eines der beiden miteinander zu verklebenden Teile aufgetragen. Wiederum ist darauf zu achten, daß der Klebstoff dabei nur bis auf eine Temperatur erwärmt wird, bei der der latente Härter noch nicht aktiviert wird. Die beiden Teile werden unmittelbar nach dem Auftragen der Klebstoffschmelze zusammengefügt; beim Abkühlen erstarrt der Klebstoff und verbindet die beiden Teile vorläufig miteinander.

Die so erhaltene Verbindung hat schon eine gewisse Festigkeit. Beispielsweise wird der noch ungehärtete Klebstoff nicht ausgewaschen, wenn die vorläufig miteinander verbundenen Bleche zur Entfettung in einem Waschbad und anschließend in einem Phosphatierbad behandelt werden.

Die Härtung des Klebstoffes erfolgt schließlich im Ofen bei einer Temperatur, die deutlich oberhalb der Temperatur liegt, bei der die Klebstoffschmelze auf die zu verbindenden Teile aufgetragen wurde. Vorzugsweise wird die Härtung bei einer Temperatur oberhalb von 150°C, beispielsweise bei 180°C, während ca. 30 Minuten durchgeführt.

Im folgenden wird die Erfindung anhand von Beispielen erläutert.

Soweit nichts anderes betont ist, sind alle Mengen in Gewichtsprozent angegeben.

Als festes Epoxidharz a) wurde in den Beispielen ein aus Bisphenol A und Epichlorhydrin hergestelltes Produkt verwendet. Dieses hat ein durchschnittliches zahlenmäßiges Molekulargewicht von etwa 900 bis 1000. Der Epoxidgruppengehalt lag bei 1600 bis 2200 mMol/kg, entsprechend einem Epoxid-Äquivalentgewicht von etwa 450 bis 600. Die Erstarrungstemperatur (Kofler) dieses festen Epoxidharzes lag bei 50 bis 70°C. Das Harz hatte bei 25°C eine Dichte von 1,19 g/ml. Das flüssige Epoxidharz hatte ein Epoxid-Äquivalentgewicht von 182 bis 192. Seine Viskosität bei 25°C betrug 8.000 bis 13.000 mPa·s. Die Dichte lag in diesem Fall bei 1,16 g/ml.

Als lineare ATPPG wurden in den Beispielen Produkte verwendet, die ein mittleres Molekulargewicht von etwa 2000 bzw. 4000 aufwiesen. Das Aktivierbarer Wasserstoff-Äquivalent (AHEW) lag bei 500 bzw. 1000. Als trifunktionelle ATPPG wurden Produkte verwendet, die ein mittleres Molekulargewicht von etwa 440 bis 3000 aufwiesen. Das AHEW lag bei ca. 73 bis 500.

Die in den Beispielen angegebenen Viskositätswerte wurden in einem Rheometer mit Platte/Platte-Meßkonfiguration bei 0,1 s⁻¹ bestimmt. Die in den Beispielen angegebenen Zugscherfestigkeiten (ZSF) wurden wie folgt gemessen: Gereinigte, unbeschichtete Tiefziehbleche 100×25×1 mm wurden gemäß DIN 53281/53283 12 mm überlappend verklebt. Schichtdicke 0,3 mm. Härtung: 30 min./180°C. Die Bestimmung wurde bei Prüftemperaturen von -40°C, +20°C, und +90°C durchgeführt. Eine weitere Bestimmung erfolgte bei +20°C, nachdem die jeweilige Probe 20 Tage lang einem Salzsprühtest nach DIN 50021 unterworfen worden war.

Die in den Beispielen angegebene Winkelschälfestigkeit (WSF) wurde nach DIN 53282 bestimmt. Schichtdicke 0,3 bzw. 3 mm. Härtung: 30 min/180°C, Abzugsgeschwindigkeit v = 25 bzw. 2000 mm/min. Es ist der aus dem Plateau des Schäldiagramms ermittelte Schälwiderstand angegeben.

### Beispiel 1

Die Reaktionsprodukte von linearem und trifunktionellem ATPPG mit DGEBA können separat oder im Gemisch hergestellt werden. Aus folgenden Bestandteilen wurden die Harze A bis E hergestellt, wobei die Ansatzgröße jeweils 1 kg betrug:

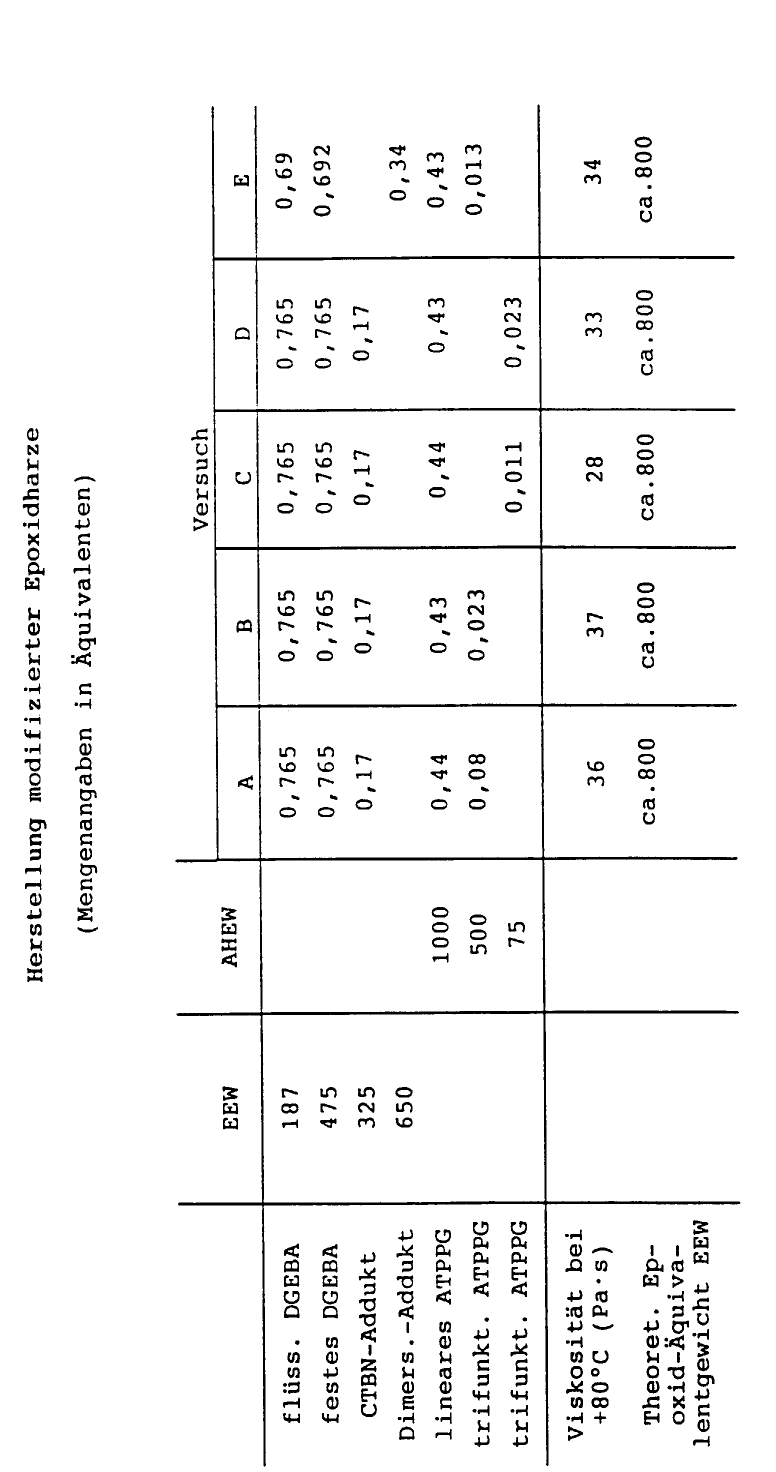

### Beispiele 2 bis 7

Die Harzmischungen (1A bis 1E) wurde gemäß nachfolgender Tabelle zum fertigen Klebstoff compoundiert und geprüft.

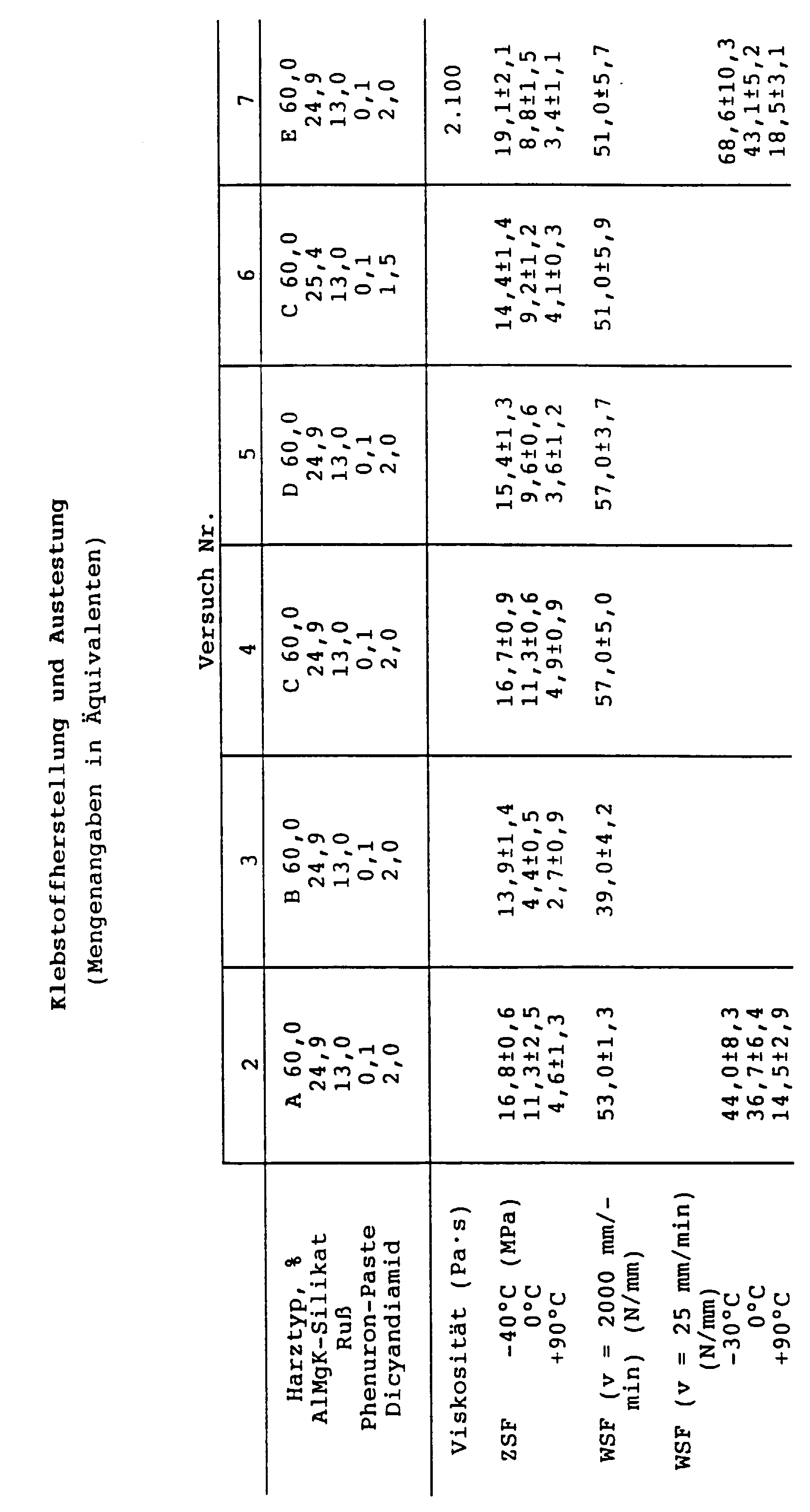

Die Harzgemische A bis E wurden bei etwa 80°C aufgeschmolzen und im Kneter mit Austragschnecke vorgelegt. Danach wurde das zusätzliche Harz (CTBN-Addukt bzw. Dimersäure-Addukt) zugegeben und bei 80°C homogen gemischt.

Der mineralische Füllstoff AlMgK-Silikat, Ruß und Dicyandiamid wurden dann zugegeben und homogen vermischt. Zuletzt wurde die Phenuron-Beschleuniger-Paste zugegeben. Bei 60 bis 80°C wurde 1 h im Vakuum gemischt. Das Produkt wurde über die Schnecke extrudiert.

### Abkürzungen:

- CTBN: Carboxyl-terminierter Butadien-Nitrilkautschuk
- ATPPG: Amino-terminiertes Polypropylenglykol
- ATPEG: Amino-terminiertes Polyethylenglykol
- DGEBA: Diglycidylether von Bisphenol A
- DGEBF: Digylcidylether von Bisphenol F
- AEW: Amin-Äquivalentgewicht
- EEW: Epoxid-Äquivalentgewicht
- AHEW: Aktiver Wasserstoff-Äquivalentgewicht
- ZSF: Zugscherfestigkeit
- WSF: Winkelschälfestigkeit
- DMTA: Dynamisch-mechanische Thermoanalyse

## Patentansprüche

1. Reaktiver Schmelzklebstoff, der eine oder mehrere Epoxidharzkomponenten, mindestens einen thermisch aktivierbaren latenten Härter für die Harzkomponente sowie ggf. Beschleuniger, Füllstoffe, Thixotropie-Hilfsmittel und weitere übliche Zusatzstoffe enthält, wobei die Harzkomponente ein Umsetzungsprodukt von
a) 0,5 bis 1 Äquivalenten eines bei Raumtemperatur festen, aus Bisphenol A und/oder Bisphenol F und Epichlorhydrin hergestellten Epoxidharzes mit einem Epoxid-Äquivalentgewicht von 400 bis 700,
b) 0,5 bis 1 Äquivalenten eines bei Raumtemperatur flüssigen, aus Bisphenol A und/oder Bisphenol F und Epichlorhydrin hergestellten Epoxidharzes mit einem Epoxid-Äquivalentgewicht von 150 bis 220 und
c) 0,125 bis 0,5 Äquivalenten amino-terminierter Polyethylen- oder Polypropylenglykole ist,
und wobei die Epoxidharze a) und b) in einer solchen Menge vorliegen, daß ein stöchiometrischer Überschuß von mindestens 1 Äquivalent an Epoxidgruppen gegenüber den Aminogruppen gewährleistet ist, **dadurch gekennzeichnet**, daß die amino-terminierten Polyethylen- oder Polypropylenglykole
i) lineare amino-terminierte Polyethylenglykole (ATPEG) der Formel I
H₂N-(CH₂)₂-[O-(CH₂)₂-O-(CH₂)₂]ₙ-NH₂ I,
in der n = 17 bis 27 ist, und/oder
ii) lineare amino-terminierte Polypropylenglykole der Formel II
H₂NCH(CH₃)CH₂[OCH₂CH(CH₃)]ₙNH₂ II,
in der n = 40 bis 200 sein kann, mit einem durchschnittlichen Molekulargewicht von > 2.000 oder
iii) lineare amino-terminierte Polyethylenglykole der Formel I, in der n = 17 bis 27 ist, oder lineare amino-terminierte Polypropylenglykole der Formel II, in der n = 5 bis 200 sein kann, mit einem durchschnittlichen Molekulargewicht von > 360 zusammen mit trifunktionellen amino-terminierten Polypropylenglykolen der Formel III 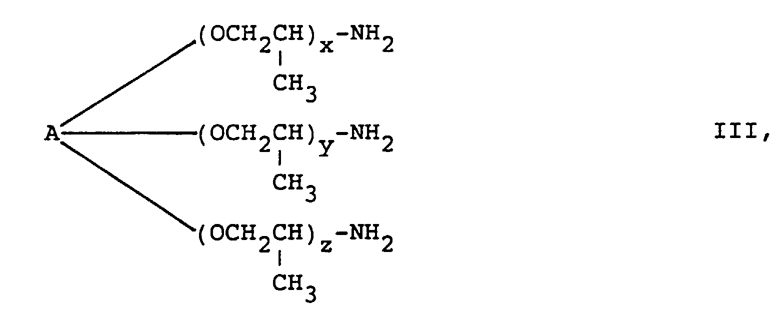 in der A eine CH₃CH₂C(CH₂)₃≡ oder eine 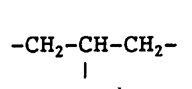 Gruppe ist und x, y und z unabhängig voneinander 1 bis 40 sind, mit einem durchschnittlichen Molekulargewicht von > 400 sind, und daß 5 bis 40% der Epoxidäquivalente des gesamten Epoxidharzanteils ersetzt sind durch (a) ein Addukt von dimeren Fettsäuren an Epoxidharze aus Diglycidylethern von Bisphenol A und/oder F (DGEBA und/oder DGEBF) und/oder (b) ein Addukt von carboxylterminiertem Butadien-Nitrilkautschuk an Epoxidharze aus Diglycidylethern von Bisphenol A und/oder F (DGEBA und/oder DGEBF).

2. Reaktiver Schmelzklebstoff nach Anspruch 1, dadurch gekennzeichnet, daß das feste Epoxidharz a) ein Epoxidharz-Äquivalentgewicht von > 400 hat.

3. Reaktiver Schmelzklebstoff nach einem der vorhergehenden Ansprüche, dadurch gekennzeichnet, daß das flüssige Epoxidharz b) ein Epoxid-Äquivalentgewicht von 182 bis 192 hat.

4. Reaktiver Schmelzklebstoff nach einem der vorhergehenden Ansprüche, dadurch gekennzeichnet, daß der thermisch aktivierbare latente Härter Dicyandiamid ist.

5. Verfahren zur Herstellung des reaktiven Schmelzklebstoffes gemäß einem der Ansprüche 1 bis 4, bei welchem man durch Umsetzung von
a) 0,5 bis 1 Äquivalenten eines bei Raumtemperatur festen, aus Bisphenol A und/oder Bisphenol F und Epichlorhydrin hergestellten Epoxidharzes mit einem Epoxid-Äquivalentgewicht von 400 bis 700,
b) 0,5 bis 1 Äquivalenten eines bei Raumtemperatur flüssigen, aus Bisphenol A und/ oder Bisphenol F und Epichlorhydrin hergestellten Epoxidharzes mit einem Epoxid-Äquivalentgewicht von 150 bis 200 und
c) 0,125 bis 0,5 Äquivalenten amino-terminierter Polyethylen- oder Polypropylen-glykole die Harzkomponente herstellt,
wobei die Epoxidharze a) und b) in einer solchen Menge vorliegen, daß ein stöchiometrischer Überschuß an Epoxidgruppen gegenüber den Aminogruppen gewährleistet ist, **dadurch gekennzeichnet**, daß man als amino-terminierte Polyethylenglykole oder Polypropylenglykole
i) lineare amino-terminierte Polyethylenglykole (AT PEG) der Formel I
H₂N-(CH₂)₂-O-[(CH₂)₂-O-(CH₂)₂]ₙ-NH₂ I,
in der n = 17 bis 27 ist,
ii) lineare amino-terminierte Polypropylenglykole der Formel II
H₂NCH(CH₃)CH₂[OCH₂CH(CH₃)]ₙNH₂ II,
in der n = 40 bis 200 sein kann, mit einem durchschnittlichen Molekulargewicht von > 2.000 oder
iii) lineare amino-terminierte Polyethylenglykole (AT PEG) der Formel I, in der n = 17 bis 27 ist, oder lineare amino-terminierte Polypropylenglykole der Formel II, in der n = 5 bis 200 sein kann, mit einem durchschnittlichen Molekulargewicht von > 360 zusammen mit trifunktionellen amino-terminierten Polypropylenglykolen der Formel III 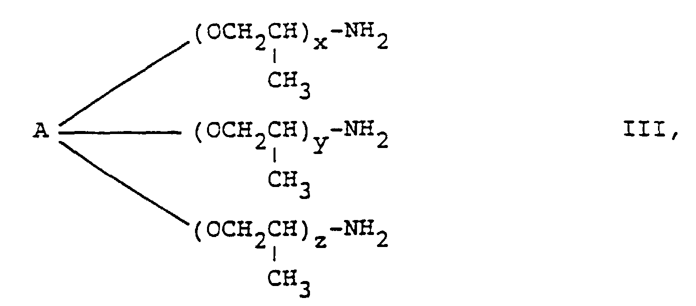 in der A eine CH₃CH₂C(CH₂)₃≡ oder eine 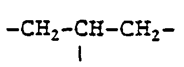 Gruppe ist und x, y und z unabhängig voneinander 1 bis 40 sind, mit einem durchschnittlichen Molekulargewicht von > 400 einsetzt und daß man 5 bis 40% der Epoxidäquivalente des gesamten Epoxidharzanteils ersetzt durch (a) ein Addukt von dimeren Fettsäuren an Epoxidharze aus Diglycidylethern von Bisphenol A und/oder F (DGEBA und/oder DGEBF) und/oder (b) ein Addukt von carboxylterminiertem Butadien-Nitrilkautschuk an Epoxidharze aus Diglycidylethern von Bisphenol A und/oder F (DGEBA und/oder DGEBF).

6. Verfahren nach Anspruch 5, dadurch gekennzeichnet, daß man den latenten Härter als letzten Bestandteil zumischt.

7. Verwendung des reaktiven Schmelzklebstoffes gemäß einem der Ansprüche 1 bis 4 zum Verkleben von Stahlblechen.

## Claims

1. Reactive hot melt adhesive containing one or more epoxy resin components, at least one thermally activatable latent curing agent for the resin component, optionally together with accelerators, fillers, thixotropic agents and further conventional additives, wherein the resin component is a reaction product of
a) 0.5 to 1 equivalents of an epoxy resin, which is solid at room temperature, prepared from bisphenol A and/or bisphenol F and epichlorohydrin with an epoxy equivalent weight of 400 to 700,
b) 0.5 to 1 equivalents of an epoxy resin, which is liquid at room temperature, prepared from bisphenol A and/or bisphenol F and epichlorohydrin with an epoxy equivalent weight of 150 to 220 and
c) 0.125 to 0.5 equivalents of amino-terminated polyethylene or polypropylene glycols,
and wherein the epoxy resins a) and b) are present in such a quantity that a stoichiometric excess of at least 1 equivalent of epoxy groups over the amino groups is ensured, characterised in that the amino-terminated polyethylene or polypropylene glycols are
i) linear amino-terminated polyethylene glycols (ATPEG) of the formula I
H₂N-(CH₂)₂-[O-(CH₂)₂-O-(CH₂)₂]ₙ-NH₂ I,
in which n = 17 to 21, and/or
ii) linear amino-terminated polypropylene glycols of the formula II
H₂NCH(CH₃)CH₂[OCH₂CH(CH₃)]ₙNH₂ II,
in which n may be 40 to 200, with an average molecular weight of > 2,000 or
iii) linear amino-terminated polyethylene glycols of the formula I in which n = 17 to 27, or linear amino-terminated polypropylene glycols of the formula II, in which n may be 5 to 200, with an average molecular weight of > 360, together with trifunctional amino-terminated polypropylene glycols of the formula III 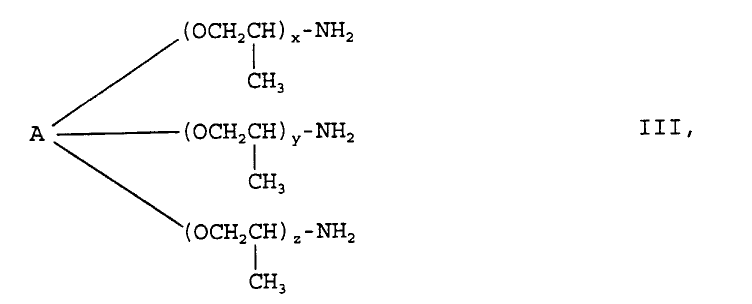 in which A is a CH₃CH₂C(CH₂)₃≡ or a 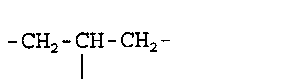 group and x, y and z independently of each other are 1 to 40, with an average molecular weight of > 400, and that 5 to 40 % of the epoxy equivalents of the total epoxy resin component are replaced by (a) an adduct of dimeric fatty acids on epoxy resins prepared from diglycidyl ethers of bisphenol A and/or F (DGEBA and/or DGEBF) and/or (b) an adduct of carboxyl-terminated butadiene-nitrile rubber on epoxy resins prepared from diglycidyl ethers of bisphenol A and/or F (DGEBA and/or DGEBF).

2. Reactive hot melt adhesive according to claim 1, characterised in that the solid epoxy resin a) has an epoxy resin equivalent weight of > 400.

3. Reactive hot melt adhesive according to one of the previous claims, characterised in that the liquid epoxy resin b) has an epoxide equivalent weight of 182 to 192.

4. Reactive hot melt adhesive according to one of the preceding claims, characterised in that the thermally activatable latent curing agent is dicyanodiamide.

5. Process for the production of the reactive hot melt adhesive according to one of claims 1 to 4, in which the resin component is prepared by reacting
a) 0.5 to 1 equivalents of an epoxy resin, which is solid at room temperature, prepared from bisphenol A and/or bisphenol F and epichlorohydrin with an epoxy equivalent weight of 400 to 700,
b) 0.5 to 1 equivalents of an epoxy resin, which is liquid at room temperature, prepared from bisphenol A and/or bisphenol F and epichlorohydrin with an epoxy equivalent weight of 150 to 200 and
c) 0.125 to 0.5 equivalents of amino-terminated polyethylene or polypropylene propylene glycols
wherein the epoxy resins a) and b) are present in such a quantity that a stoichiometric excess of at least 1 equivalent of epoxy groups over the amino groups is ensured, characterised in that the amino-terminated polyethylene or polypropylene glycols used are
i) linear amino-terminated polyethylene glycols (ATPEG) of the formula I
H₂N-(CH₂)₂-[O-(CH₂)₂-O-(CH₂)₂]ₙ-NH₂ I,
in which n = 17 to 27,
ii) linear amino-terminated polypropylene glycols of the formula II
H₂NCH(CH₃)CH₂[OCH₂CH(CH₃)]ₙNH₂ II,
in which n may be 40 to 200, with an average molecular weight of > 2,000 or
iii) linear amino-terminated polyethylene glycols of the formula I in which n = 17 to 27, or linear amino-terminated polypropylene glycols of the formula II, in which n may be 5 to 200, with an average molecular weight of > 360, together with trifunctional amino-terminated polypropylene glycols of the formula III 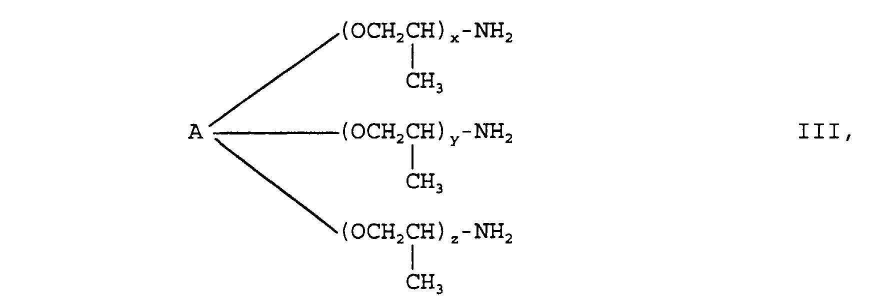 in which A is a CH₃CH₂C(CH₂)₃≡ or a 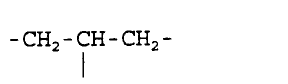 group and x, y and z independently of each other are 1 to 40, with an average molecular weight of > 400, and that 5 to 40 % of the epoxy equivalents of the total epoxy resin component are replaced by (a) an adduct of dimeric fatty acids on epoxy resins prepared from diglycidyl ethers of bisphenol A and/or F (DGEBA and/or DGEBF) and/or (b) an adduct of carboxyl-terminated butadiene-nitrile rubber on epoxy resins prepared from diglycidyl ethers of bisphenol A and/or F (DGEBA and/or DGEBF).

6. Process according to claim 5, characterised in that the latent curing agent is added as the last component.

7. Use of the reactive hot melt adhesive according to one of claims 1 to 4 for bonding steel sheets.

## Revendications

1. Colle à fusion réactive, qui contient un ou plusieurs composants de résine époxy, au moins un durcissement latent activable thermiquement pour les composants de résine ainsi qu'éventuellement des accélérateurs, des charges, des adjuvants de thixotropie et d'autres matières additives usuelles, colle dans laquelle le composant de résine est un produit de réaction de :
a) 0,5 à 1 équivalent d'une résine époxy solide à température ambiante préparée à partir de bisphénol A et/ou de bisphénol F et d'épichlorhydrine avec un poids équivalent d'époxyde de 400 à 700,
b) 0,5 à 1 équivalent d'une résine époxyde liquide à température ambiante préparée à partir de bisphénol A et/ou de bisphénol F et d'épichlorhydrine avec un poids équivalent d'époxyde de 150 à 220 et,
c) 0,125 à 0,5 équivalents de polyéthylèneglycols ou polypropylèneglycols terminés par des amines,
et dans laquelle les résines époxy a) et b) se présentent en une quantité telle, qu'on garantit un excès stoechiométrique d'au moins un équivalent en groupes époxy par rapport aux groupes amino, caractérisée en ce que les polyéthylèneglycols et polypropylèneglycols terminés par des amines contiennent :
i) des polyéthylèneglycols linéaires (ATPEG) terminés par des amines de formule I :
H₂N-(CH₂)₂-[O-(CH₂)₂-O-(CH₂)₂]ₙ-NH₂ I
dans laquelle n = 17 à 27. Et/ou
ii) des polypropylèneglycols linéaires terminés par des amines de la formule II.
H₂NCH(CH₃)CH₂[OCH₂CH(CH₃)]ₙNH₂ II
dans laquelle n peut être n = 40 à 200, avec un poids moléculaire de > 2000 pi
iii) des polyéthylèneglycols linéaires, terminés par des amines, de la formule I, dans laquelle n est n = 17 à 27 ou des polypropylèneglycols linéaires, terminés par des amines de la formule II, dans laquelle n peut être n = 5 à 200; avec un poids moléculaire moyen de > 360 ensemble avec des polypropylèneglycols trifonctionnels, terminés par des amines de la formule III, 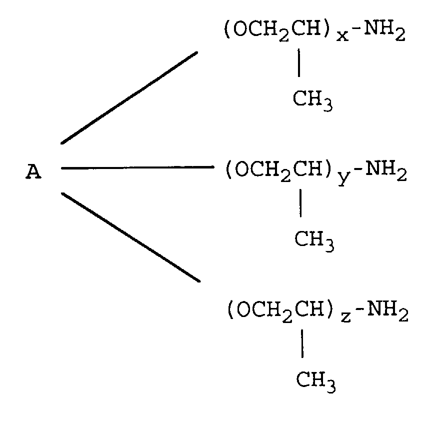 dans laquelle A est un groupe CH₃CH₂(CH₂)₃≡ ou un groupe - CH₂-CH-CH₂- et x, y et z sont indépendamment l'un de l'autre, ont un poids moléculaire moyen de > 400 et,
en ce que 5 à 40 % de l'équivalent époxyde de la proportion totale d'époxyde sont remplacés par :
a) un produit d'addition d'acides gras dimères sur des résines époxy provenant de diglycidyléthers du bisphénol A et/ou F (DGEBA et/ou DGEBF) et/ou,
b) un produit d'addition de caoutchouc butadiène-nitrile sur des résines époxy terminées par un carboxyle provenant de diglycidyléthers du bisphénol A et/ou F (DGEBA et/ou DGEBF).

2. Colle à fusion réactive selon la revendication 1, caractérisée en ce que la résine époxy solide a) a un poids équivalent de résine époxy de > 400.

3. Colle à fusion réactive selon une des revendications précédentes, caractérisée en ce que la résine époxy liquide b) a un poids équivalent en époxyde de 182 à 192.

4. Colle à fusion réactive selon une des revendication précédentes, caractérisée en ce que le durcisseur activable thermiquement est du dicyandiamide.

5. Procédé de préparation de colle à fusion réactive selon une des revendications 1 à 4, dans lequel on produit le composant de résine par réaction de :
a) 0,5 à 1 équivalent d'une résine époxy solide à température ambiante préparée à partir de bisphénol A et/ou de bisphénol F et d'épichlorhydrine avec un poids équivalent d'époxyde de 400 à 700,
b) 0,5 à 1 équivalent d'une résine époxyde liquide à température ambiante préparée à partir de bisphénol A et/ou de bisphénol F et d'épichlorhydrine avec un poids équivalent d'époxyde de 150 à 220 et,
c) 0,125 à 0,5 équivalents de polyéthylèneglycols ou polypropylèneglycols terminés par des amines,
et dans laquelle les résines époxy a) et b) se présentent en une quantité telle, qu'on garantit un excès stoechiométrique d'au moins un équivalent en groupes époxy par rapport aux groupes amino, caractérisée en ce que les polyéthylèneglycols et polypropylèneglycol's terminés par des amines contiennent :
i) des polyéthylèneglycols linéaires (ATPEG) terminés par des amines de formule I :
H₂N-(CH₂)₂-[O-(CH₂)₂-O-(CH₂)₂]ₙ-NH₂ I
dans laquelle n = 17 à 27. Et/ou
ii) des polypropylèneglycol linéaires terminés par des amines de la formule II.
H₂NCH(CH₃)CH₂[OCH₂CH(CH₃)]ₙNH₂ II
dans laquelle n peut être 40 à 200, avec un poids moléculaire de > 2000 pi
iii) des polyéthylèneglycols linéaires, terminés par des amines, de la formule I, dans laquelle n est n = 17 à 27 ou des polypropylèneglycols linéaires, terminés par des amines de la formule II, dans laquelle n peut être 5 à 200, avec un poids moléculaire moyen de > 360 ensemble avec des polypropylèneglycols trifonctionnels, terminés par des amines de la formule III, 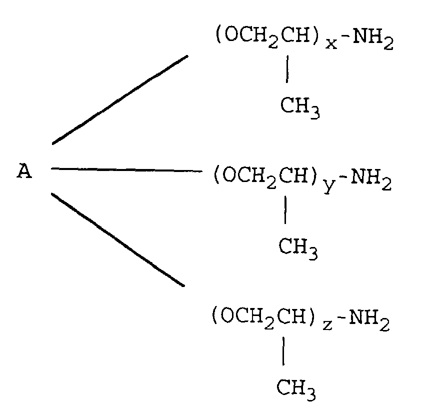 dans laquelle A est un groupe CH₃CH₂(CH₂)₃≡ ou un groupe - CH₂-CH-CH₂- et x, y et z sont indépendamment l'un de l'autre, ont un poids moléculaire moyen de > 400 et,
en ce que 5 à 40 % de l'équivalent époxyde de la proportion totale d'époxyde sont remplacés par :
a) un produit d'addition d'acides gras dimères sur des résines époxy provenant de diglycidyléthers du bisphénol A et/ou F (DGEBA et/ou DGEBF) et/ou,
b) un produit d'addition de caoutchouc butadiène-nitrile sur des résines époxy terminées par un carboxyle provenant de diglycidyléthers du bisphénol A et/ou F (DGEBA et/ou DGEBF).

6. Procédé selon la revendication 5, caractérisé en ce qu'on ajoute et mélange le durcisseur latent en tant que dernier composant.

7. Utilisateur de la colle à fusion réactive selon une des revendications 1 à 4 pour le collage de tôles d'acier.
